(19) Europäisches Patentamt

European Patent Office

Office européen des brevets

(11) **EP 0 611 679 B1**

(12) **EUROPÄISCHE PATENTSCHRIFT**

(45) Veröffentlichungstag und Bekanntmachung des Hinweises auf die Patenterteilung:
16.09.1998 Patentblatt 1998/38

(51) Int. Cl.⁶: **B60Q 1/44**

(21) Anmeldenummer: 94102490.3

(22) Anmeldetag: 18.02.1994

(54) **Verzögerungswarnanlage**

Deceleration warning device

Dispositif avertisseur en cas de décélération

(84) Benannte Vertragsstaaten:
BE DE ES FR GB IT SE

(30) Priorität: 19.02.1993 DE 4305186

(43) Veröffentlichungstag der Anmeldung:
24.08.1994 Patentblatt 1994/34

(73) Patentinhaber:
• Gerhaher, Max, Dipl.-Ing.
D-94405 Landau/Isar (DE)
• Gerhaher, Franz, Dr
D-94315 Straubing (DE)

(72) Erfinder:
Gerhaher, Max, Dipl.-Ing.
D-94405 Landau/Isar (DE)

(74) Vertreter:
Blumbach, Kramer & Partner GbR
Radeckestrasse 43
81245 München (DE)

(56) Entgegenhaltungen:
EP-A- 0 380 736          EP-A- 0 453 601
WO-A-91/17068          DE-A- 4 014 916
GB-A- 2 239 701          US-A- 4 663 609

**Beschreibung**

Die Erfindung betrifft eine Verzögerungswarnanlage zur Reduzierung der Gefahr von Auffahrunfällen im Straßenverkehr gemäß dem Oberbegriff des Anspruchs 1. Bei den Toten und Verletzten sowie bei den Sachschäden durch Verkehrsun

fälle geht ein besonders hoher Anteil auf Auffahrunfälle zurück. Zwar wurden in den letzten Jahrzehnten große Fortschritte bei der Weiterentwicklung des passiven Unfallschutzes erzielt, durch welche die Unfallfolgen insbesondere für die Fahrzeuginsassen vermindert werden. Hier sei nur auf Knautschzone, Anschnallgurte, Kopfstützen und Airbag hingewiesen.

Die Weiterentwicklung des etwa in den zwanziger Jahren bekannt gewordenen und danach gesetzlich eingeführten Bremslichtes hat dagegen kaum Fortschritte gemacht. Die Bremslichter wurden nur etwas heller und etwas größer und leuchten auch schon auf, sobald das Bremspedal, ohne Abbremsung des Fahrzeugs, einen bestimmten Leerweg zurückgelegt hat. In den USA gibt es neuerdings ein drittes Bremslicht in Fahrzeugmitte.

Die wesentlichen Nachteile der bekannten Bremslichter konnten jedoch durch diese Verbesserungen nicht beseitigt werden. Die Bremslichter leuchten nur bei Betätigung der Fußbremse, nicht jedoch beim Ausrollenlassen des Fahrzeugs, also bei der Verzögerung durch Gaswegnehmen oder durch Einschalten einer zusätzlichen Motor- oder Wirbelstrombremse und auch nicht bei Verzögerung durch den Luftwiderstand. Diese Ursachen kömmen sowohl bei hoher Geschwindigkeit (überwiegend durch den Luftwiderstand) und bei geringer Geschwindigkeit (überwiegend durch das Motorbremsmoment) zu einer Verzögerung von etwa 1,5 bis 2 m/sec$^2$ führen. Bei einem unbeladenen LKW und gleichzeitiger Betätigung von Motorbremse und Wirbelstrombremse können sogar bis über 3 m/sec$^2$ erreicht werden, und dies alles ohne Bremslicht. Diese Verzögerungen entsprechen bereits etwa 15 bis 30 % der Verzögerung bei einer Notbremsung auf trockener Straße und etwa 50 bis 100 % der Verzögerung einer Notbremsung auf verschneiter Straße. Es wird also bereits allein durch Gaswegnehmen über eine Dauer von mehreren Sekunden eine Differenzgeschwindigkeit zu einem nachfolgenden Fahrzeug aufgebaut, welche die Gefahr eines Auffahrunfalls in sich birgt, ohne daß das Bremslicht aufleuchtet.

Dies wirkt sich insbesondere in all den Fällen verschärfend aus, in welchen dem eigentlichen Bremsvorgang (mit Bremslicht) ein längerer Ausrollvorgang (ohne Bremslicht) vorangegangen ist. Gerade bei Einhaltung eines ausreichend großen Sicherheitsabstandes ist nämlich die bremslichtlose Verzögerung optisch kaum wahrnehmbar, da auf große Entfernung der Effekt des räumlichen Sehens fast Null ist. Außerdem ist auch der optische Effekt des Größerwerdens des Objektes (nämlich des vorausfahrenden Fahrzeugs) durch Annäherung bei großen Entfernungen minimal und schlecht erkennbar, da z.B. bei der Entfernung von 100 m durch die Annäherung um 10 m nur eine Vergrößerung von 11 % verursacht wird. Bei einer Entferunung von 20 m wird sich jedoch durch eine Annäherung um 10 m die Größe des voranfahrenden Fahrzeugs verdoppeln.

Durch die fehlende Frühwarnung wird außerdem gerade am Beginn der erforderlichen Abbremsung des nachfolgenden Fahrzeugs wertvolle Zeit "verschenkt", da der im gleichen Zeitraum "verschenkte" Bremsweg bei hoher Geschwindigkeit viel länger ist als gegen Ende des Bremsvorganges bei geringer Geschwindigkeit. Ein auf große Entferunungen wirdsamer Frühwarneffekt wird aber gerade durch das konventionelle Bremslicht in keiner Weise erreicht.

Ein weiterer Nachteil des üblichen Bremslichtes ist darin begründet daß die Warnung durch Aufleuchten nur so lange anhält, wie gebremst bzw. das Bremspedal betätigt wird. Durch Lösen der Bremse ist jedoch noch nicht die Gefahr des Auffahrunfalles beseitigt, da die durch den Bremsvorgang verursachte Differenzgeschwindigkeit zum nachfolgenden Fahrzeug immer noch vorhanden ist. Das Bremslicht vermittelt durch das Erlöschen vielmehr den irreführenden Eindruck, daß die Gefahr inzwischen beseitigt sei.

Nachteilig wirkt sich auch aus, daß die Intensität der Warnung bei den konventionellen Bremslichtern unabhängig ist von der Höhe der Bremsverzögerung. Dies kann einerseits zu übersteigerter Schreckreaktionen führen (z.B. scharfes Bremsen bei zu geringem Sicherheitsabstand) und dadurch unfallauslösend wirken. Andererseits fehlt aber auch die erforderliche erhöhte Intensität der Warnung, die z.B. bei Notbremsungen mit hoher Bremsverzögerung erforderlich wäre.

Seit etwa 20 Jahren ist die sogenannte Warnblinklichtanlage gesetzlich vorgeschrieben. Dabei handelt es sich um eine manuelle Einschaltung aller vier Richtungsanzeiger, welche dann im Gleichtakt aufblinken und wieder erlöschen. Die Betätigung ist vorgeschrieben zur Sicherung stehender Fahrzeuge auf Schnellverkehrsstraßen (z.B. im Stau) oder beim Abschleppen von Fahrzeugen. Es handelt sich quasi um ein Dauerbremslicht, welches sich sehr gut bewährt hat, da es von versierten Fahrern auf der Autobahn auch schon eingeschaltet wird, wenn ein Stau oder Unfall weit voraus erkennbar ist. Der Nachteil der Warnblinklichtanlage liegt jedoch darin, daß sie manuell betätigt werden muß und dazu gerade im Falle einer Notbremsung, also im Falle der besonders erhöhten Gefahr, keine Zeit mehr bleibt und auch der Fahrer nicht durch zusätzliche Tätigkeiten abgelenkt werden sollte. Auch nach einem Auffahrunfall sind viele Fahrer durch Schockwirkung oder Verletzung nicht in der Lage, die Warnblinklichtanlage einzuschalten.

Manche erfahrene Fahrer warnen den nachfolgenden Verkehr durch intermittierendes Bremsen und dadurch intermittierendes Aufleuchten der Bremslichter (wenn das Bremspedal genügend weit gelöst wird). Diese Methode hat jedoch den großen Nachteil, daß sie nur bei geringen Bremsverzögerungen und ausreichend langer Zeit anwendbar ist, nicht jedoch, wenn wirklich Gefahr in Verzug und hohe Bremsverzögerung erforderlich ist.

Eine weitere Entwicklung, an welcher seit Jahren ohne durchschlagenden Erfolg gearbeitet wird, ist das sogenannte Abstandsradar. Es löst bei Unterschreitung des erforderlichen Sicherheitsabstandes durch das nachfolgende Fahrzeug bei diesem selbst ein optisches oder akustisches Signal aus oder wirkt sogar derart auf dieses ein, daß es automatisch verzögert wird. Die Nachteile des Abstandsradars sind sehr vielfältig und werden wie foglt kurz erläutert: Eine akustische oder optische Warnung (am Armaturenbrett) lenkt eher ab, als daß sie die Aufmerksamkeit erhöht, da sie nicht, wie es zweckmäßig wäre, von der Stelle ausgeht, welche eine Gefahr darstellt, nämlich von dem vorausfahrenden Fahrzeug. Die Radaranlage reagiert auch nicht auf die besonders gefährliche Differenzgeschwindigkeit, sondern nur auf die Unterschreitung des Sicherheitsabstandes. Ein weiterer Nachteil liegt darin, daß der Fahrer viel zu häufig gewarnt wird, nämlich z.B. auch dann, wenn ein vor ihm einscherendes Fahrzeug den Sicherheitsabstand unterschreitet hier bedarf es keiner zusätzlichen Warnung, da der Vorgang auch für den weniger aufmerksamen Fahrer sehr auffällig in Erscheinung tritt. Auch eine automatische Abbremsung oder Unterbrechung des Antriebes durch das Abstandsradar wäre überdies ein so starker Eingriff in den Fahrvorgang, daß er in vielen Fällen sogar unfallauslösend sein könnte.

Neuerdings wurde vorgeschlagen, daß das Gaswegnehmen (Gaspedalbewegung) ein orangefarbenes "Bremslicht" als Vorwarnung zum eigentlichen - roten - Bremslicht aufleuchten zu lassen. Der Vorteil dieser Methode besteht darin, daß auch Verzögerungen durch Gaswegnehmen angezeigt werden und bei sofort nachfolgendem Bremsvorgang die Reaktionszeit um den Zeitbedarf für das Umsetzen des Fußes auf das Bremspedal, also um einige Zehntel-Sekunden, verkürzt wird. Der Nachteil dieser Vorrichtung liegt darin, daß sie bei jedem auch nur Kurzfristigen Gaswegnehmen anspricht und die Aufmerksamkeit nachfolgender Fahrer durch Reizüberflutung sinkt. Durch diese Schaltung besteht deshalb die Gefahr, daß die Zahl der Auffahrunfälle eher erhöht wird, da der eigentliche Bremsvorgang mit dem rotem Bremslicht nicht mehr deutlich genug registriert wird.

Bei einer weiteren Entwicklung wird daran gearbeitet, die Ansprechzeit der Bremsleuchten, die üblicherweise bis zur vollen Lichtleistung bei 0,20 bis 0,25 Sekunden liegt, zu verkürzen. Dies kann z.B. durch Schwachstromvorheizung als auch durch Verwendung von Leuchtdioden an Stelle der Glühlampen erfolgen. In beiden Fällen kann die Ansprechzeit um etwa 0,10 bis 0,15 Sekunden verkürzt werden. Dies ist gewiß ein kleiner Fortschritt, da der Bremsweg bei einer Geschwindigkeit von z.B. 100 km/Std. um 3 bis 4,5 m. bei 150 km/Std. proportional dazu um 4,5 bis fast 7 m verkürzt wird. Die oben beschriebenen grundsätzlichen Nachteile des konventionellen Bremslichtes werden jedoch auch dadurch nicht vermindert oder gar beseitigt.

Aus der DE-A-4 014 916 ist eine Vorrichtung zum Erzeugen komplementärer - dynamischer Bremssignale mit selectivem Verhalten bekannt. Dabei werden die Bremssignale aus einem Regler mit PID-Regelverhalten hergeleitet. Ein solcher PID-Regler ändert das Signalbild zunächst um einen von der Änderungsgeschwindigkeit der Verzögerung abhängigen Betrag. Nach Ablauf einer Vorhaltezeit geht das Signalbild auf einen verzögerungsproportionalen Wert zurück und ändert sich dann entsprechend dem Wert des Integralanteils der Verzögerung. Das Signalbild entspricht somit der Addition der Ausgänge eines P-,I- und D-Reglers. Die sofort einsetzende, verzögerungsproportionale Warnung der P-Regelung wird bei der bekannten Vorrichtung somit dahingehend ergänzt, daß das sofort einsetzende Signal durch den D-Anteil, der von der Änderungsgeschwindigkeit der Verzögerung abhängt, zusätzlich verstärkt wird, und dadurch bei einer schnell anschwellenden oder nur kurzzeitigen starken Abbremsung zu einem noch deutlicheren Signal für das hintere Fahrzeug führt, das den Fahrer zum sofortigen Bremsen veranlaßt. In der Praxis führt dies zu einer Abbremsung des nachfolgenden Fahrzeugs, die schärfer ist als an sich erforderlich ist, was in der Folge in einer Kolonne zu immer schärfer Bremsungen der Hinterwagen führt, bis es schließlich zu einem Auffahrunfall kommt.

Der Erfindung liegt die Aufgabe zugrunde, eine Verzögerungswarnanlage zu schaffen, die die Nachteile herkömmlicher Bremslicht- und Warnblinkanlagen vermeidet und die Gefahr von Auffahrunfällen im Straßenverkehr vermindert.

Diese Aufgabe wird mit den Merkmalen des Hauptanspruchs gelöst.

In Abweichung vom Stand der Technik entspricht bei der erfindungsgemäßen Verzögerungswarnanlage das nach hinten abgegebene Signalbild einem Gefahrengesamtwert, der ein Zeitintegral oder Wegintegral, wie in Anspruch 1 angegeben, ist. Bei der erfindungsgemäßen Verzögerungswarnanlage wird somit nur der integrale Anteil der Verzögerung berücksichtigt, was insbesondere bei Kolonnenverkehr ein Überbremsen verhindert, d.h. den befürchteten Ziehharmonikaeffekt vermeidet, jedoch andererseits ein ausreichend rasches Abbremsen gewährleistet. Durch die Abhängigkeit der Intensität der Warnung von der Höhe des Gefahrengesamtwertes wird erreicht, daß der Fahrer des nachfolgenden Fahrzeugs genau dann besonders intensive gewarnt wird, wenn wenn die Gefahr eines Auffahrunfalls akut wird, bei unkritischen Zuständen aber seine Aufmerksamkeit nicht über Gebühr beansprucht wird. Dabei soll die Verzögerungswarnanlage nicht erst bei Verzögerung durch Betätigung der Fußbremse ansprechen, sondern auch bereits bei Verzögerung durch Betätigung der Motor-oder einer Wirbelstrombremse, sowie beim Gaswegnehmen. Es ist vorteilhaft, daß die Verzögerungswarnanlage erst anspricht, wenn die Verzögerung einen bestimmten, relative geringen Wert von z.B. $0,5 \text{m/sec}^2$ überschreitet. Bei Unterschreiten dieses Wertes spricht dann die Warnanlage dann nicht unnötiger Weise und somit nicht zu häufig an.

Die Unteransprüche sind auf vorteilhafte Weiterbildungen der Verzögerungswarnanlage gerichtet.

Vorzugweise besteht die Verzögerungswarnanlage aus zwei oder mehreren Verzögerungslichtern an Stelle der bisherigen Bremslichter, welch bei Überschreiten eines festgelegten weiteren Grenzwertes der Verzögerung z.B. 0,5 bis 1 m/sec$^2$ zu blinken beginnen. Das hat den Vorteil, daß der Fahrer des nachfolgenden Fahrzeugs intensiver gewarnt wird, sobald das vorausfahrende Fahrzeug kräftiger abgebremst wird.

Besonders vorteilhaft ist es dabei, die Höhe des Gefahrengesamtwertes $\Sigma G$ aus der mittleren Verzögerung und der Zeitdauer der Verzögerung oder dem Verzögerungsweg zu ermitteln, da auch durch relativ langsames Abbremsen aus hoher Geschwindigkeit über einen langen Zeitraum oder einen langen Verzögerungsweg bis zu sehr niederer Geschwindigkeit oder gar bis zum Stand hohe Gefahrengesamtwerte entstehen können. Besonders deutlich wird dies bei geringer Verkehrsdichte und großen Fahrzeugabständen auf der Autobahn, da die Verzögerung des voranfahrenden Fahrzeuges wegen des großen Abstandes nur undeutlich wahrgenommen wird. Bei kleineren Abständen wird dagegen die Verringerung des Abstandes durch räumliches Sehen und durch rasche optische Vergrößerung des voranfahrenden Fahrzeugs viel deutlicher wahrgenommen.

Zweckmaßigerweise wird an Stelle der mittleren Verzögerung die jeweils veränderliche Verzögerung b über die Zeitdauer t oder über den Verzögerungsweg s integriert und zwar nach einer bestimmten Funktion z.B. nach der Formel:

$$\Sigma G_1 = \int_o^t b\, dt \text{ oder } \Sigma G_{1*} = \int_o^s b\, ds$$

Da sich aber nach der Formel

$$s = \frac{v^2}{2b}$$

bei erhöhter Verzögerung der Bremsweg s umgekehrt proportional zur Verzögerung b verhält, also verkürzt, erhöht sich gleichzeitig die Gefahr für das nachfolgende Fahrzeug.

Nach der Formel

$$G_1 = \int_o^t b\, dt$$

wird dies aber nicht berücksichtigt, da das Integral
bei umgekehrt proportionaler Änderung von b und t (nach der Formel t = v : b ) den gleichen Wert behält. Zweckmäßigerweise wird deshalb zur Feststellung des integrierten Gerahrengesamtwertes $G_2$ die Höhe der jeweiligen Verzögerung verstärkt berücksichtigt. Dies kann dadurch erfolgen, daß z.B. der Wert der Bremsverzögerung in eine bestimmte Potenz erhoben wird. Setzt man die Verzögerung in die zweite Potenz, so erhöht sich bei einer Erhöhung der Verzögerung b auch der Gefahrengesamtwert $\Sigma G_2$ und zwar umgekehrt proportional zur Länge des Verzögerungsweges s wie folgt.

$$\Sigma G_2 = \int_o^t b^2\, dt$$

Außerdem ist es aber z.B. möglich, statt der verstärkten Berücksichtigung der Verzögerung, durch b$^2$ den Zeitablauf t abgeschwächt zu berücksichtigen z.B. durch √t, voraus sich ein ähnlicher Effekt ergibt. Selbstverständlich ist es auch möglich, die Verzögerung oder die Zeit in einer anderer Potenz zu berücksichtigen; dies ist aber mehr die Angelegenheit einer empirischen Optimierung.

Erfahrungsgemäß steigt die Höhe der Gefahr mit der Geschwindigkeit, bei welcher sich Auffahrunfälle ereignen. Fährt nämlich ein Fahrzeug mit einer Geschwindigkeit von z.B. 30 km/Std. auf ein (gleich schweres) stehendes Fahrzeug auf, so wird das stehends Fahrzeug je nach Deformation, Energievernichtung und Restenergie etwas beschleunigt, kann aber leicht wieder abgebremst werden (falls es nicht sowieso auf ein davorstehendes Fahrzeug aufgeschoben wird). Das auffahrende Fahrzeug kommt durch den Unfall ebenfalls zum Stehen, so daß, abgesehen von weiteren möglichen Auffahrunfällen dieser Unfall abgeschlossen ist. Ereignet sich jedoch der Auffahrunfall mit der gleichen Geschwindigkeitsdifferenz von 30 km/Std. bei einer Geschwindigkeit von z.B. 150 km/Std. für das vorausfahrende bzw. 180 km/Std. für das nachfolgende Fahrzeug, so ist zwar der durch den Auffahrunfall verursachte Schaden etwa gleich groß wie bei dem Aufprall auf ein stehendes Fahrzeug, da sich die vernichtetet Ernergie, aus dem Quadrat der Geschwindigkeitsdifferenz vor und nach dem Unfall errechnet. In der Regel kommen jedoch die beiden Fahrzeuge bei hohen Geschwindigkeiten durch den Aufprall oder durch die verletzungs- oder schockbedingten Reaktionen der Fahrer ins Schleudern, so daß der an sich noch relativ harmlose Auffahrunfall nunmehr zum Auslöser für einen oder mehrere nachfolgende, wesentlich schwerere Unfälle werden kann.

Auch aus einem weitern Grund steigt die vom vorausfahrenden Fahrzeug ausgehende Gefahr bei höherer Geschwindigkeit erheblich an: Der Bremsweg steigt nämlich im Quadrat der gefahrenen Geschwindigkeit. Der durch Rechtsprechung empfohlene sogen. "halbe Tachoabstand" ist deshalb nur dann ausreichend, wenn auch das vorausfahrende Fahrzeug mit der Betriebsbremse und damit unter etwa ähnlichen Bedingungen abgebremst wird. Fährt dagegen ein vorausfahrendes Fahrzeug auf ein stehendes Hindernis auf, so daß es mit einem Bremsweg von annähernd Null abgebremst wird, so kann unter Berücksichtung einer bestimmten Reaktionszeit ein gleich schnelles. nachfolgendes Fahrzeug nur bei relativ geringen Geschwindigkeiten ohne Auffahrunfall abgebremst werden.

**1. Beispiel:** Geschwindigkeit beider Fahrzeuge $v_o$ = 50 km/h = 13.9 m/sec; Abstand a = ½ v = 25 m; Aufprall des ersten Fahrzeugs auf stehendes Hindernis; Reaktionszeit t = 1 sec. und maximale Bremsverzögerung b = 8,7 m/sec$^2$ (auf trockener Fahrbahn):

| | |
|---|---|
| Reaktionsweg: | $s_1 = v_o \times t = 13{,}9 \times 1 = 13{,}9\,m$ ; |
| Restbremsweg: | $s_2 = a - s_1 = 25 - 13{,}9 = 11{,}1\,m$ ; |
| Geschwindigkeitsdifferenz: | $\Delta v = \sqrt{2\,b\,s} = \sqrt{2 \times 8{,}7 \times 11{,}1} = 13{,}9$ m/sec= 50 km/h |
| Aufprallgeschwindigkeit: | $v_A = v_o - \Delta v = 50 - 50 = 0$ km/h . |

Bei voller Ausnutzung der möglichen Bremsverzögerung reicht der Restbremsweg von 11,1 m gerade noch aus, um das nachfolgende Fahrzeug von 50 km/h ohne Auffahrunfall bis zum Stand abzubremsen.

**2. Beispiel:** $v_o$ = 100 km/h = 27,8 m/sec; a = ½ v = 50 m; t = 1 sec; b = 8,7 m/sec$^2$.

| | |
|---|---|
| Reaktionsweg: | $s_1 = v_o \times t = 27{,}8 \times 1 = 27{,}8\,m$ ; |
| Restbremsweg: | $s_2 = a - s_1 = 50 - 27{,}8 = 22{,}2\,m$ ; |
| Geschwindigkeitsdifferenz: | $\Delta v = \sqrt{2\,b\,s} = \sqrt{2 \times 8{,}7 \times 22{,}2} = 19{,}7$ m/sec.= 71 km/h |
| Aufprallgeschwindigkeit: | $v_A = v_o - \Delta v = 100 - 71 = 29$ km/h . |

Bei gleicher Reaktionszeit und gleicher Bremsverzögerung wie im 1. Beispiel kommt es trotz Einhaltung des vorgeschriebenen Sicherheitsabstandes zu einem Auffahrunfall mit einer Aufprallgeschwindigkeit von 29 km/h.

Bei einer $v_o$= 150 km/h bleibt eine Aufprallgeschwindigkeit von 63 km/h;
bei einer $v_o$= 200 km/h eine solche von 100 km/h.

Selbstverständlich ist es zweckmäßig, bei mehreren nacheinanderfolgenden Einzelverzögerungen, z.B. $b_A$, $b_B$, $b_C$ ... die Summe der Gefahrenwerte zu ermitteln z.B. $\Sigma\Sigma G = \Sigma G_A + \Sigma G_B + \Sigma G_C + ...$

Bei einer besonders vorteilhaften Variante der erfindungsgemäßen Verzögerungswarnanlage wird deshalb bei der Ermittlung des Gefahrengesamtwertes $\Sigma G$ die vor der Verzögerung gefahrene Geschwindigkeit $v_o$ berücksichtigt. Wird dabei die Ausgangsgeschwindigkeit $v_o$ in m/sec. eingesetzt, so ergibt sich mit einem Exponenten zwischen 1,8 bis 2,2 eine wirksame Berücksichtigung derselben.

$$z.B.: \Sigma G_3 = v_o{}^2 + \int_o^t b^2 \, dt$$

Bei einer anderen Variante wird dagegen zur Ermittlung des Gefahrengesamtwertes die vor der Verzögerung gefahrene Geschwindigkeit $v_o$ als Faktor berücksichtigt. Die hat den Vorteil besonderer Einfachheit, da der Gefahrengesamtwert $G_4$ proportional abhängig ist von der Ausgangsgeschwindigkeit $v_o$

$$z.B.: \Sigma G_4 = v_o \times \int_o^t b^2 \, dt$$

Setzt sich eine Bremsverzögerung aus mehreren einzelnen aber zusammengehörigen Verzögerungen zusammen, so wird als $v_o$ zweckmäßigerweise die Geschwindigkeit vor der ersten Bremsverzögerung angesetzt.

Bei einer anderen vorteilhaften Ausführungsform wird außerdem der Straßenzustand, also der Reibungsbeiwert berücksichtigt. Die Beispiele 1 bis 3 sind nämlich nur zutreffend für trockene und griffige Straßenbeläge auf welcher hohe Bremsverzögerungen (hier z.B. 8.7 m/sec$^2$.) möglich sind. Der erforderliche Bremsweg ist mämlich umgekehrt proportional zum Reibungsbeiwert und damit zu der maximal möglichen Bremsverzögerung. Bei Annahme von nassen Fahrbahnen mit einer maximal möglichen Bromsverzögerung von z.B. 5 m/sec$^2$. erhöhen sich die Aufprallgeschwindigkeiten analog zu den obigen Beispielen ganz erheblich, wie aus folgender Tabelle ersichtlich ist.

| | |
|---|---|
| Bei $v_o$ = 50 km/h | eine $v_A$ = 12 km/h |
| Bei $v_o$ = 100 km/h | eine $v_A$ = 46 km/h |
| Bei $v_o$ = 150 km/h | eine $v_A$ = 84 km/h |
| Bei $v_o$ = 200 km/h | eine $v_A$ = 124 km/h |

Besonders gravierend wird dies z.B. bei eisglatter Fahrbahn z.B. einer möglichen Bremsverzägerung von z.B. 1 m/sec$^2$; dabei erhöhen sich, die Aufprallgeschwindigkeiten extrem:

| | |
|---|---|
| Bei $v_o$ = 50 km/h | eine $v_A$ = 33 km/h |
| Bei $v_o$ = 100 km/h | eine $v_A$ = 76 km/h |

Bei einer verbesserten Ausführungsvariante wird der Straßenzustand dadurch berücksichtigt, daß während der Dauer des Ansprechens des Antiblockiersystems (ABS) der integrierte Gefahrengesamtwert zusätzlich erhöht wird. Dies kann z.B. durch einen Faktor erfolgen. welcher dem Reziprokwert des mittleren Bremsdruckes aller Radbremszylinder entspricht. Der hydraulische Bremsdruck ist nämlich annähernd proportional der Bremsverzögerung. Baut sich nämlich aufgrund des geringen Reibungsbeiwertes (zwischen Reifen und Straße) bis zum Ansprechen des ABS nur ein geringer Bremsdruck auf, so signalisiert dies die volle Ausnutzung der möglichen Bremsverzögerung auf glatter Fahrbahn. Die Berücksichtigung des durchschnittlichen Bremsdruckes hat dabei den Vorteil, daß das Ansprechen des ABS an nur einem Rad oder an den Rädern nur einer Seite nicht überbewertet wird. Auch dabei muß die Optimierung weitgehend empirisch erfolgen.

Bei einer weiteren verbesserten Ausführungsvariante wird auch die erhöhte Gefahr eines Auffahrunfalles berücksichtigt, die durch zu nahes Auffahren des nachfolgenden Fahrzeugs entsteht. Durch den Einbau eines nach hinten gerichteten Abstandradars kann der Gefahrengesamtwert zusätzlich in dem Maß erhöht werden, in dem ein bestimmter, geschwindigkeitsabhängiger Mindestabstand z.B. der halbe Tachoabstand unterschritten wird. Dies kann z.B. durch Multiplikation des Gefahrengesamtwertes mit dem Faktor $v_o/s$ oder z.B. in erhöhten Maße mit dem Faktor $(v_o/s)^2$ berücksichtigt werden. Der Vorteil liegt darin, daß bei erhöhter Geschwindigkeit der integrierte Gefahrengesamtwert proportional bzw. überproportional zur Geschwindigkeit gesteigert wird, wie das der Realität entspricht. Außerdem wird dadurch auch der Gefahrengesamtwert umgekehrt proportional bzw. umgekehrt überproportional zum Sicherheitsabstand verändert.

Voraussetzung für die Verwertbarkeit des Gefahrengesamtwertes (und der Gefahrenteilwerte) ist die laufende, Erfassung der relevanten Daten, insbesondere der Geschwindigkeit, der Verzögerung (bzw. Beschleunigung), der Zeit, der ABS-Funktion, des Bremsdruckes und des Abstandes zum nachfolgenden Fahrzeug sowie die Verarbeitung der Daten zu Gefahrenteilwerten, die Integration und Errechnung des Gefahrengesamtwertes, die Speicherung desselben sowie die laufende Aktualisierung durch laufende Speicherung und Löschung weiterer Daten. Die Messung von Geschwindigkeit und Zeit erfolgt zweckmäßigerweise nach dem Stand der Technik elektronisch. Für die Messung von Bremsverzögerung und Beschleunigung stehen neuerdings relativ preiswerte elektronische Geräte zur Verfügung; die ABS-Funktion kann direkt aus dem ABS-Steuergerät übertragen werden und für die Messung des Abstandes des nachfolgenden Fahrzeugs steht das bekannte Abstandsradar zur Verfügung. Die Verarbeitung der erfarßten Daten zur Ermittlung der Gefahrenteilwerte ΔG und des jeweiligen Gefahrengesamtwertes ΣG erfolgt nach den gewünschten und empirisch optimierten Funktionen in einem Computer. Dieser übernimmt auch die laufend und sehr schnell verändernden Eingabedaten. Entscheidend ist, außer der sinnvollen Verknüpfung der einzelnen Daten über die oben beschriebenen Funktionen zu einem Gefahrengesamtwert ΣG, insbesondere auch die sinnvolle Aktualisierung des Gefahrengesamtwertes.

Erfindungsgemäß erfolgt dies dadurch, daß bei jeder Verzögerung, zumindest bei Verzögerungen über einem bestimmten Mindestwert, die jeweiligen Gefahrenteilwerte ΔG ermittelt und zum jeweils aktuellen Gefahrengesamtwert ΣG integriert und im Computer gespeichert werden. Die Höhe des jeweils gespeicherten aktuellen Gefahrengesamtwertes ist dann maßgeblich für die Intensität der Warnung für den Fahrer des nachfolgenden Fahrzeugs durch das Verzögerungswarnlicht. Daraus ergibt sich der entscheidende Vorteil, daß eine Warnung erfolgt, solang ein Gefahrengesamtwert gespeichert ist. Die Intensität der Warnung ist zweckmäßigerweise nach einer bestimmten Funktion an die Höhe des gespeicherten Gefahrengesamtwertes gekoppelt. Die Abschaltung der Warnung erfolgt also nicht wie bisher dadurch, daß durch Wegnehmen des Fußes vom Bremspedal gleichzeitig das Bremslicht erlöscht, obwohl die durch das Abbremsen erzeugte Differenzgeschwindigkeit und damit die Gefahr noch besteht. Vielmehr bleibt durch die Speicherung des Gefahrengesamtwertes auch die Verzögerungswarnanlage in Betrieb, so daß der noch vorhandenen Gefahr durch eine entsprechende Warnung entsprochen wird.

Damit aber bei der Vermindung der Gefahr auch die Intensität der Warnung vermindert wird, werden bei der erfindungsgemäßen Verzögerungswarnanlage auch Beschleunigungen des Fahrzeugs berücksichtigt, weil ja auch durch eine auf einen Bremsvorgang folgende Beschleunigung des Fahrzeugs die Gefahr eines Auffahrunfalles wieder vermindert wird. Da es sich bei einer Beschleunigung um eine negative Verzögerung handelt, erfolgt die Datenverarbeitung im Computer zweckmäßigerweise nach den gleichen Funktionen, so daß bei einer Beschleunigung des Fahrzeugs durch Integration negativer Gefahrenteil(werte - ΔG nach und nach eine Löschung des gespeicherten Gefahrengesamtwertes ΣG eintritt. Zweckmäßigerweise sollte dabei vorgesehen werden, daß kein negativer Gefahrengesamtwert gespeichert werden kann, da von einem fahrenden Fahrzeug immer eine positive Gefahr ausgeht und ansonsten z.B. beim Abbremsen eines eben gestarteten Fahrzeugs der Warneffekt durch einen negativen gespeicherten Gefahrengesamtwert unterdrückt würde, was sich gefahrenerhöhend auswirken würde.

Bei einer weiteren vorteilhaften Ausgestaltung der erfindungsgemäßen Anlage erfolgt auch eine Löschung des gespeicherten Gefahrengesamtwertes durch Zeitablauf. Dies kann entweder ganz einfach durch zeitabhängige Löschung des gespeicherten Wertes in konstanten Stufen erfolgen. Zweckmäßigerweise wird aber die Zeitspanne für die Löschung an der Höhe des speicherten Gefahrengesamtwertes bzw. während der Löschung an der Höhe des Restwertes gemessen. Daraus ergibt sich der Vorteil, daß z.B. nach Abbremsungen aus geringer Geschwindigkeit die Nachwarnzeit durch schnellere Löschung viel kürzer ist als nach Abbremsung aus hoher Geschwindigkeit, wodurch der erhöhten Gefahr auf der autobahn Rechnung getragen wird. Auch bei starker Abbremsung erhöht sich aufgrund der Berücksichtigung der Bremsverzögerung der Gefahrenwert und damit die Nachwarnzeit.

Besonders wichtig ist dies bei Auffahrunfällen (welche sich trotz der erfindungsgemäßen Warnanlage, wenn auch in verminderter Anszahl und abgeschwächter Form, ereignen werden), da sich durch die extrem hohe Verzögerung während des Aufpralles der Gefahrengesamtwert im Computer des aufprallenden Fahrzeuges extrem erhöhen wird. Dies führt, unabhängig davon, ob es sich um einen abgebremsten oder ungebremsten Auffahrunfall handelt, sofort zu einer Auslösung der intensivsten Stufe der Warnung mit einer sehr langen Nachwarnzeit.

Die Löschungsdauer des gespeicherten Gefahrengesamtwertes kann z.B. so programiert werden, das sie proportional zur Höhe des Gefahrengesamtwertes bzw. proportional zu der des Gefahrenrestwertes ist. Daraus ergibt sich eine konstante Geschwindigkeit der Löschung.

Zur Verdeutlichung seien hier einige wichtige Fallbeispiele wiedergegeben.

$$\Sigma G = \int_{o}^{t} b^2 \, dt$$

Annahme:   $b_1$ = konstant = 1 m/sec$^2$ (z.B. Auslaufenlassen ohne Bremse)

$b_2$ = konstant = 8 m/sec$^2$ (= Notbremsung)

$b_3$ = 10 bis 450 m/sec$^2$ (= Auffahrunfall)

t in Sekunden

$v_{oA}$ = 60 m/sec (= Autobahn 216 km/Std)

$v_{oB}$ = 30 m/sec (= Bundesstraße 108 km/Std)

$v_{oS}$ = 10 m/sec (= Stadtverkehr 36 km/Std)

$v_{oK}$ = 1 m/sec (= Kriechverkehr 3.6 km/Std)

EP 0 611 679 B1

Abbremsung von $v_o$ bis zum Stand.

Wählt man beispielsweise eine Warndauer (in Sekkunden), welche dem jeweils restlichen Zahlenwert der $\Sigma G$ (in $m^2/sec^3$) entspricht, so ergeben sich etwa folgende Nachwarnzeiten (ohne Berücksichtigung der Warnzeiten während der Verzögerung).

| Geschwindigkeit $v_o$ in km/h | | gespeicherter Gefahrenwert; hier zahlengleich mit der | | |
|---|---|---|---|---|
| | | Nachwarnzeit bei $b_1 = 1$ m/sec$^2$ | Nachwarnzeit bei $b_2 = 8$ m/sec$^2$ | Nachwarnzeit nach $b_3 =$ Auffahrunfall |
| Autobahn | 216km/h | 60 sec | 500 sec = 8 min | 25.000 sec = 400 min |
| Bundesstr. | 108km/h | 30 sec | 250 sec = 4 min | 6.000 sec = 100 min |
| Stadtverk. | 36km/h | 10 sec | 80 sec = 1.3 min | 600 sec = 10 min |
| Kriechverk. | 3.6km/h | 1 sec | 8 sec = 0,1 min | 6 sec = 0,1 min |

Natürlich ist es ggf. zweckmässig. diese Warnzeiten empirisch zu optimieren und durch andere Funktionen entsprechend anzupassen. Nach der jeweiligen Zeit schaltet das Warngerät dann ganz ab. nachdem es schon vorher, entsprechend der abnehmenden Höhe des noch gespeicherten Gefahrenrestwertes mit rückläufiger Intensität gewarnt hat.

Die Löschung des gespeicherten Gefahrengesamtwertes durch Zeitablauf kann aber grundsätzlich auch nach anderen Funktionen ablaufen; dies ist lediglich eine Frage der theoretischen und empirischen Optimierung. Bei einer zweckmäßigen Variante wird die jeweilige Geschwindigkeit der Löschung am noch gespeicherten Gefahrenrestwert gemessen, so daß die Löschung am Anfang rasch erfolgt, mit abnehmenden Bestwert aber nicht linear sondern nur asymtotisch abnimmt. Der Vorteil ist darin zu sehen, daß bei liegengebliebenen Fahrzeugen die Warnfunktion, wenn auch auf immer geringer werdendem Niveau, so doch ohne zeitliche Beschränkung aufrecht erhalten wird.

Auch eine einfache Begrenzung der Löschung bei einem Mindest-Gefahrenrestwert ist möglich; diese Variante hat den Vorteil, daß die Gefahrenwarnung nach Erreichen des Restwertes ebenfalls auf Dauer mit einer Mindestintensität erfolgt.

Weiter ist es möglich, die Löschung in Abhängigkeit von der gefahrenen Geschwindigkeit oder in Abhängigkeit von einem geschwindigkeitsabhängigen Mindestabstand des nachfolgenden Fahrzeugs zu unterbrechen. Dies hat den Vorteil, daß beim Verzögern oder Bremsen nicht erst der Gefahrengesamtwert von Null aufgebaut werden muß, sondern von Anfang an entsprechend der latenten Gefahr aus Geschwindigkeit und/oder zu geringem Sicherheitsabstand gespeichert ist. Dadurch erfolgt die Steigerung zur intensiven Warnung im Falle einer Verzögerung schneller.

Bei der beschriebenen Ausführung ist es möglich; daß bei Erreichen der oben beschriebenen Restwerte durch Löschung die Warnfunktion abgeschaltet wird. Dies hat den Vorteil einer Beschränkung der Warnung auf die dringenderen Fälle. Es ist aber auch möglich, die Warnfunktion nicht zu unterbrechen und sogar die Warnung zuerst weniger intensiv und dann immer intensiver in Gang zu setzen, je stärker ein nachfolgendes Fahrzeug den geschwindigkeitsabhängigen Sicherheitsabstand unterschreitet.

Bei einer vorteilhaften Ausführungsvariante wird die Löschung durch Zeitablauf unterbrochen, solange positive Gefahrenteilwerte eingespeichert werden; dies schließt eine negative Beeinflussung von Speicherung und Löschung aus und ermöglicht eine schnellere Speicherung der erforderlichen Gefahrenwerte.

Bei einer anderen Variante läuft die Löschung durch Zeitablauf weiter - solange löschbare Werte gespeichert sind - also auch während der Zeitphase der Verzögerung. Dabei muß aber die Löschung durch Zeitablauf, wie in allen anderen Fällen deutlich langsamer erfolgen als die Einspeicherung durch Ausrollenlassen des Fahrzeugs, da sonst dabei die positiven Gefahrenteilwerte durch gleich große Löschungen kompensiert würden, obwohl sich aus der entstehenden Geschwindigkeitsdifferenz eine Gefahr aufbaut. Bei den Beispielen der auf Seite 13 mitte wiedergegebenen Tabelle hat sich nämlich bei der Verzögerung von 1 m/sec$^2$ in jedem der vier angegebenen Fälle die Einspeicherung genau in dem Zeitraum vollzogen, welcher der Nachwarnzeit entspricht. Bei der relativ geringen Verzögerung von 1 m/sec$^2$ würde sich also bei gleichzeitiger Löschung durch Zeitablauf im Speicher kein Gefahrenwert mehr aufbauen. In diesem Falle wäre also die Verzögerung von 1 m/sec$^2$ die unterste Schwelle, bei welcher die Anlage anfinge zu arbeiten. Aus dieser Überlegung ergibt sich, daß entweder die Löschung während der Einspeicherung ganz unterbrochen werden muß oder die Löschgeschwindigkeit während der Speicherung zumindest auf einen Bruchteil der Einspeicher-Geschwindigkeit beschränkt sein muß.

Durch Steuerung nach einer anderen Funktion (langsamere Löschung) oder bei Abschaltung der Löschung wäh-

8

rend der Einspeicherung kann also die unterste Schwelle der Verzögerung, bei welcher eine Speicherung stattfindet, auch viel tiefer, so z.B. auf eine Verzögerung von nur 0,5 m/sec$^2$ gelegt werden. Dieser Schwellenwert kann aber auch in Abhängigkeit von der Geschwindigkeit und/oder in Abhängigkeit vom mittleren Bremsdruck beim Ansprechen des ABS programmiert werden. Dies hat den Vorteil, daß er auch bei Glatteis noch deutlich unter der dann sehr geringen Verzögerung von z.B. nur 0,5 m/sec$^2$ liegt.

Was die Warnung des Fahrers des nachfolgenden Fahrzeugs betrifft, so liegt die erfindungsgemäße Lösung der Aufgabe darin, die Intensität der Warnung von der Höhe der Gefahr eines möglichen Auffahrunfalles abhängig zu machen. Dies ist, wie bereits oben beschrieben, durch Ermittlung und Speicherung eines jeweils aktuellen Gefahrengesamtwertes möglich, dessen augenblickliche Höhe der jeweilige Maßstab für die Intensität der Warnung ist.

Wie bereits oben beschrieben erfolgt die Warnung zweckmäßigerweise durch ein oder mehrere blinkende Warnlichter. Im Unterschied zu dem bekannten Stand der Technik erfolgt die Auslösung der blinkenden Warnlichter nicht erst durch das Bremspedal sondern schon durch Verzögerung allein, sobald ein bestimmter Gefahrenschwellenwert erreicht wird. Bei einer vorteilhaften Ausführungsform ist der Gefahrenschellenwert zusätzlich in Abhängigkeit vom mittleren Bremsdruck beim Ansprechen des ABS abhängig, so daß z.B. in der gefährlichen Situation auf Glatteis eine wesentlich frühere Auslösung der Warnung erfolgt als bei normalen Straßenzustand.

Dieser Schwellenwert muß sehr niederer liegen, um auch geringfügige Auffahrunfälle bei Kriechgeschwindigkeit zu vermeiden. Bei einer vorteilhaften Ausführungsform des Warngerätes ist der Gefahrenschwellenwert geschwindigkeitsabhängig gesteuert und um eine Reizüberflutung im Schnellverkehr zu vermeiden, bei welchem es ja in erster Linie um die Vermeidung schwerer und schwerster Auffahrunfälle aus großen Abständen und mit hohen Differenzgeschwindigkeiten geht. Bei einer vorteilhaften Ausführungsform ist der Gefahrenschwellenwert zusätzlich vom mittleren Bremsdruck beim Ansprechen des ABS abhängig, so daß z.B. in der gefährlichen Situation auf Glatteis eine wesentlich frühere Auslösung der Warnung erfolgt als bei normalem Straßenzustand.

Erfindungsgemäß wird außerdem je nach Höhe des gespeicherten Gefahrengesamtwertes die Blinkdauer und Blinkfrequenz und damit die Intensität der Warnung variiert. Dabei stehen mehrere Möglichkeiten zur Auswahl:

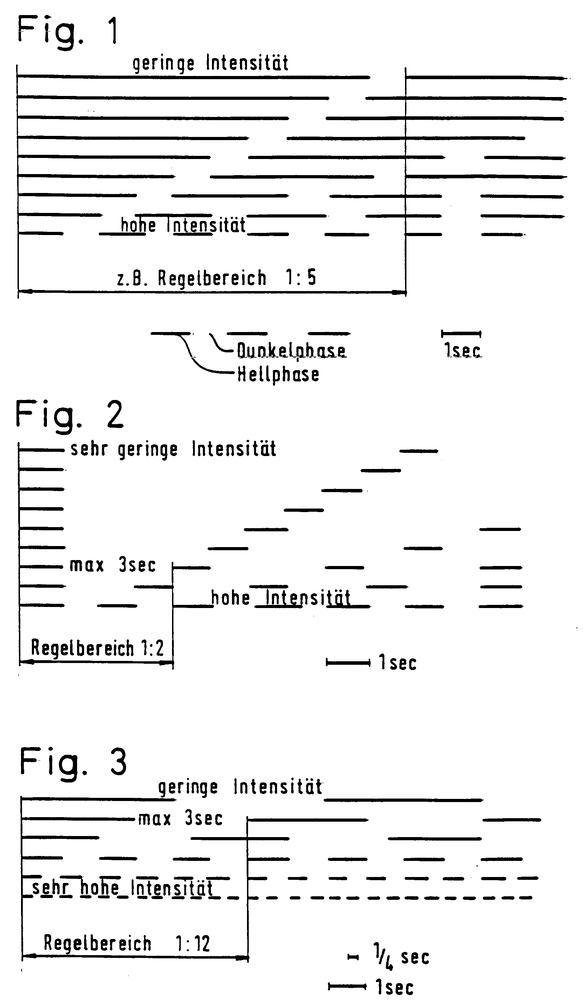

Bei der ersten Variante wird das Verzögerungswarnlicht durch Überschreitung des Gefahrenschwellenwertes eingeschaltet. Bei Erhöhung des Gefahrengesamtwertes erfolgt im bestimmten Abständen eine kurze Unterbrechung (Erlöschen des Warnlichtes). Bei weiterer Erhöhung des Gefahrengesamtwertes folgen die kurzen, in sich gleich langen Unterbrechungen in immer kürzeren Abständen aufeinander, wie dies in Fig. 1 dargestellt ist. Die Pausen haben z.B. eine Dauer von einer Sekunde: ein günstiger Praxiswert muß durch empirische Optimierung festgestellt werden. Die maximal sinnvolle Intensität ist dabei einerseits technisch durch die Abkühlungs- und Aufheizgeschwindigkeit der Lampe begrenzt, andererseits physiologisch dadurch, daß zu schnelles Blinken mehr und mehr als Dauerlicht und deshalb nicht mehr als weitere Intensivierung wahrgenommen wird. Der Vorteil dieser Ausführungsvariante liegt darin, daß sie dem herkömmlichen Bremslicht eng verwandt ist und daß ein relativ großer Regelbereich von z.B. 1:5 möglich ist, da es keine langen Pausen gibt. Der Nachteil liegt darin, daß das bereits durch geringe Verzögerung ausgelöste Dauerlicht, wie bisher auch, gleich einen recht hohen Warneffekt auslöst, ohne daß dies erforderlich ist; das bedeutet, daß eine sehr geringe Warnintensität durch Blinken nicht möglich ist.

Bei der zweiten Variante, deren Charakteristik in Fig. 2 dargestellt ist, blinkt bei Überschreitung des Grenzwertes das Verzögerungswarnlicht einmal kurz auf, z.B. eine Sekunde lang, worauf eine längere Pause folgt. Bei Erhöhung des Gefahrengesamtwertes verkürzen sich dann die Pausen zwischen den Leuchtphasen konstanter Länge solange, bis die Leuchtphasen und die Pausen etwa gleich lang sind. Der Vorteil dieser Variante liegt darin, daß die Intensität der Warnung bei einem geringeren Gefahrengesamtwert durch das nur kurze Aufblinken auch angemessen gering ist. Dies ist einerseits bei allen Geschwindigkeiten vorteilhaft, da durch kurze schwache Verzögerungen nicht gleich Warnungen mit relativ hoher Intensität ausgelöst werden. Andrerseits liegt der Nachteil dieser Variante darin, daß die Pausen auf eine Dauer von ca. maximal 3 sec beschränkt sein müssen, während der ja keine Warnung stattfindet. Dies ist insbesondere bei geringer Warnintensität im Kriech- und Stadtverkehr der Fall, weniger im Schnellverkehr, da hier bei geringer Intensität mehr Zeit zur Verfügung steht. Bis zum Erreichen gleich langer Leuchtphasen und Pausen von je 1 Sekunde ergibt sich deshalb nur ein Regelbereich von 1:2.

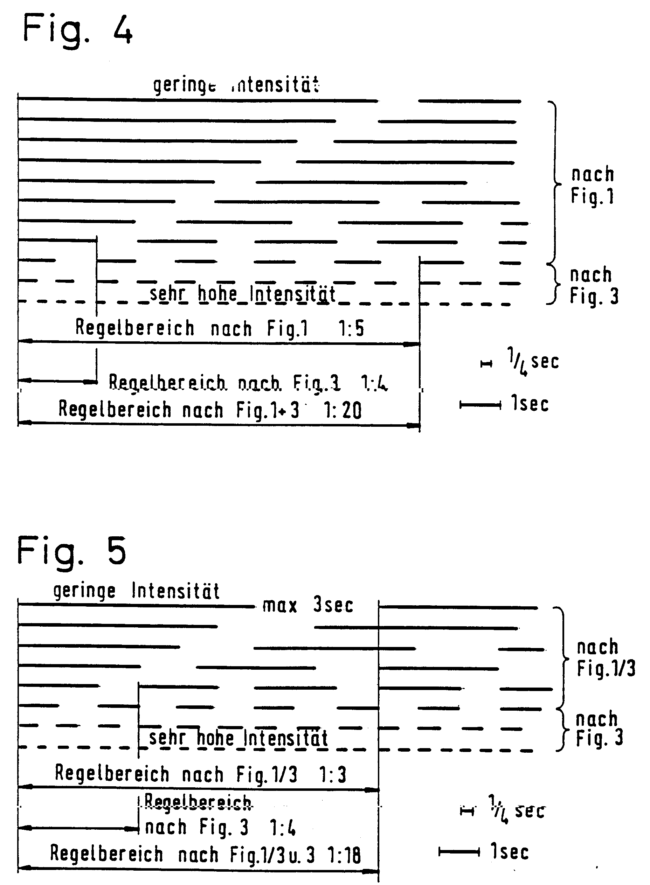

Bei einer dritten Variante, welche in Fig. 3 dargestellt ist, sind die Leuchtphasen und Pausen immer gleich oder annähernd gleich lang und werden mit zunehmendem Gefahrengesamtwert immer kürzer, so daß die Frequenz entsprechend steigt. Dies hat den Vorteil, daß bei gleichlangen Hell-Dunkel-Phasen die physiologische Wirkung der Frequenzsteigerung stärker ist, als wenn die Frequenz nur durch Verkürzung der Hell- oder der Dunkelphasen gesteigert wird. Dies ist besondern wichtig im Bereich hoher Gefahrengesamtwerte. Außerdem hat diese Variante den Vorteil eines sehr hohen Regelbereiches von ca. 1:12 wenn man mit Pausen von maximal 3 Sekunden beginnt und bis zu einer Frequenz von 2 pro Sekunde steigert. Dies ist mit Leuchtdioden noch gut möglich, da diese bereis nach ca. 0,1 sec ihre volle Lichtleistung erreichen und auch schnell wieder erlöschen. Physiologisch ist der Halbsekundentakt ebenfalls schon sehr auffällig; eine begrenzte Steigerung der Frequenz ist wohl noch sinnvoll.

Eine vierte Variante besteht in einer Kombination der zweiten und dritten Variante und ist in Fig. 4 dargestellt. Dabei erfolgt die Steigerung der Instensität im Bereich geringer bis mittlerer Gefahrengesamtwerte nach dem System der Variante 1 mit sich verkürzenden Hellphasen. Sobald dann Hell-und Dunkelphasen gleich lang sind, z.B. je 1 Sekunde, verkürzen sie sich bei weiterer Steigerung des Gefahrengesamtwertes nach dem System der Variante 3, also im Gleitakt von Hell- und Dunkelphase. Die weitere Frequenzsteigerung ist dann, wie oben beschrieben, nur technisch und physiologisch begrenzt und hat wohl mit einer Frequenz von 3 bis 4 pro Sekunde ihr Intensitätsmaximum erreicht. Der Vorteil dieser Variante liegt insbesondere darin, daß sie die Vorteile der Varianten 1 und 3 kombiniert und einen Regelbereich von etwa 1:20 ermöglicht.

In Fig. 5 ist eine weitere Variante dargestellt, nämlich im Bereich geringer Intenistät als Zwischenlösung zwischen Variante 1 und 3 mit z.B. 2/3 Hell-und 1/3 Dunkelphase von max. 3 sec Dauer. Bei Erreichen einer Dunkelphase von 1 sec Dauer erfolgt dann der Übergang auf Variante 3 mit gleichlangen Hell- und Dunkelphasen. Auch bei dieser Variante ergibt sich ein großer Regelbereich von z.B. 1:18.

Bei einer anderen vorteilhaften Weiterentwicklung beginnt die Warnung immer mit einer Hellphase, wie dies auch in Fig. 1 bis 5 dargestellt ist, sobald der Gefahrenschwellenwert überschritten wird. Der Vorteil liegt in der unverzüglichen Umsetzung der Gefahr in eine Warnung, was bei Beginn der Warnung mit einer Pause nicht der Fall wäre.

In der Praxis ist der nutzbare Regelbereich des in einem variablen Rhythmus blinkenden Warnlichtes dadurch beschränkt, daß eine Blinkfrequenz von etwa 1 bis 1,5 pro Sekunde bei Glühlampen und 2 bis 3 pro Sekunde bei Leuchtdioden schlecht überschritten werden kann. Auch eine Absenkung der Frequenz unter 1/10 pro Sekunde oder eine Vergrößerung der Pausen auf viel mehr als 3 Sekunden wird zunehmend zum Verlust eines sinnvollen Warneffektes führen. Der sich daraus ergebende Regelbereich liegt dann, wie oben für Variante 1 bis 3 erläutert, bei 1:2 bis 1:12 und bei Kombinationen bei 1:20. Trotzdem ist ein noch viel breiterer Regelbereich für die Intensität erforderlich, damit bei kleinen Gefahrengesamtwerten im Kriechverkehr die Warnintensität noch ausreichend hoch ist, trotzdem aber die höchsten Warnstufei, nach einer Notbremsung oder einem Auffahrunfall auf der Autobahn noch eine hohe Steigerungsmöglichkeit besteht. Die Tabelle auf Seite 13 zeigt, daß bereits zwischen dem untersten erforderlichen Gefahrenwert von 1 (bei v = 1 m/sec und b = 1 m/sec$^2$) und dem obersten Wert ohne Auffahrunfall von 500 (bei v = 60 m/sec und b = 8 m/sec$^2$) ein Verhältnis von 1:500 besteht. Daraus wird deutlich, daß die Intensitätsregelung durch die Blinkfrequenz allein bei weitem nicht ausreicht. (Zu der Tabelle ist zu erläutern, daß die Nachwarnzeit in Sekunden gleichgesetzt wurde mit dem Zahlenwert des Gefahrengesamtwertes).

Erfindungsgemäß wird diese Aufgabe dadurch gelöst, daß auch die Helligkeit des Verzögerungswarnlichtes in Abhängigkeit vom Gefahrengesamtwert geregelt wird. Auch hier ist eine untere Grenze gesetzt, unter welcher eine sinnvolle Warnung nicht zustande kommt, da diese nur durch plötzliches Einschalten eines Lichtes überhaupt eintritt. Die Helligkeit kann jedoch bei hohen Gefahrenwerten auch sehr weit gesteigert werden, da bei höchster Gefahr eine gewisse Blendung zu Gunsten einer verbesserten Warnung in Kauf genommen werden kann. Ein Regelbereich von 1:10, möglicherweise auch weit mehr, kann als realistisch angesehen werden. Multipliziert man dies mit dem Regelbereich der Blinkfrequenz von z.B. 1:20 so ergibt sich schon ein Regelbereich von 1:200, der zwar schon hilfreich aber trotzdem noch verbosserungswürdig ist.

Eine weitere erfindungsgemäße Verbesserung ergibt sich aus der Größe der leuchtenden Fläche. Durch die Anzahl von Glühbirnen oder von Leuchtdioden kann die Fläche in hohem Maße variert werden: mit Glühbirnen z.B. ohne Schwierigkeiten im Bereich von 1:10 mit Leuchtdioden z.B. im Bereich von 1:100

Daraus ergibt sich nun insgesamt durch Multiplikation mit dem oben genannten Bereich von 1:200 ein Gesamtbereich von 1:2.000 bis 1:20.000. Dabei ist es nicht unbedingt erforderlich, daß dies stufenlos oder in engen Stufen gesteuert wird, wenngleich dies technisch problemlos möglich ist. Viel wichtiger ist es , daß trotz schwacher Intensität bei geringer Gefahr auch noch eine Steigerung zu einer Warnung von höchster Instensität möglich ist. Aus der letzten Spalte der Tabelle auf Seite 13 ist ersichtlich, daß es bei Auffahrunfällgen aus hoher Geschwindigkeit zu Gefahrengesamtwerten von z.B. 25.000 kommen kann. Bei der neuerungssgemäßen Lösung ist außerdem zu berücksichtigen, daß die physiologische Wahrnehmbarkeit von optischen Eindrücken überwiegend nach logarithmischen Funktionen verläuft, daß also z.B. 20fache Lichtleistung nicht etwa als 20-fache Helligkeit empfunden wird und deshalb auch die Lichtemfindlichkeit des menschlichen Auges einen Regelbereich von ca. 1:10.000 abdeckt.

Eine weiter Erweiterung der Regelung der Helligkeit wird erfindungsgemäß in Abhängigkeit von der Umgebungshelligkeit vorgeschlagen. Dies hat den Vorteil, daß im Sonnenlicht die Warnlichter auch bei niederer Leistungsstufe noch ausreichend gut sichtbar sind, bei Nacht aber - außer bei Notbremsungen und Auffahrunfällen - keine Blendung eintritt.

Eine weitere Verbesserung der erfindungsgemäßen Warnanlage besteht darin, die Verzögerungswarnlichter so anzuordnen und zu gestalten, daß Verwechslungen mit den Fahrzeugsrücklichtern oder den Blinklichtern für die Fahrtrichtungsanzeige vermieden werden. Grundsätzlich ist der Warneffekt durch das Brems- oder Verzögerungslicht viel wichtiger als die Anzeige des vorgesehenen Richtungswechsels, da der Verzögerungsvorgang i.d.R. ohne Rücksichtnahme und ohne jede Vorwarnung der nachfolgenden Verkehrsteilnehmer ausgelöst wird und außerdem eine unmittelbare Gefahrenerhöhung durch Erzeugung einer Differenzgeschwindigkeit darstellt. Demgegenüber hat die Richtungsanzeige für den nachfolgenden Verkehr mehr den Sinn einer Information, gleichwohl aber auch eine gewisse Warnfunktion vor einem möglicherweise folgenden Bremsvorgang. Außerdem darf - ganz im Gegensatz zum Bremsvorgang - ein Richtungswechsel nur erfolgen, wenn dadurch ein nachfolgendes Fahrzeug nicht gefährdet oder zu einer Reaktion gezwungen wird. Ein Abbiegen eines gleichschnellen vorausfahrenden Fahrzeugs ist zudem völlig gefahrlos, wenn es ohne Bremsvorgang (z.B. an einem Autobahnabzweig) vor sich geht. Obwohl also die Verzögerungswarnung für nachfolgende Fahrzeuge weit wichtiger ist, als die Richtungsanzeige, sollte eine Verwechslung beider vermieden werden und dies umso mehr, je höher die Intensität der Verzögerungswarnung ist.

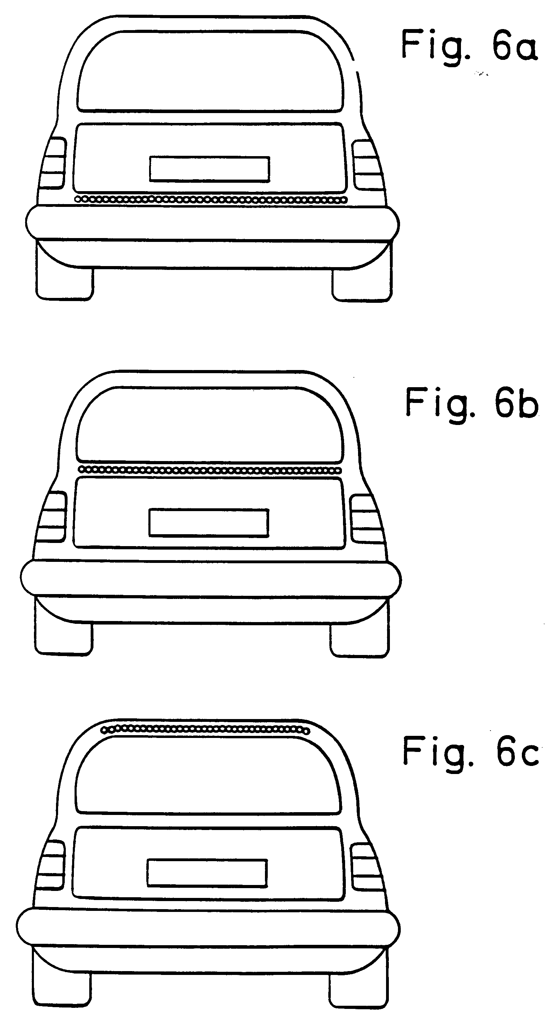

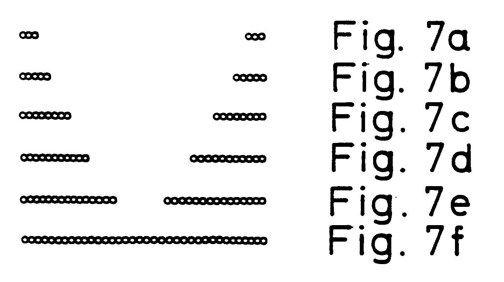

Die erfindungsgemäße Lösung dieser Aufgabe erfolgt dadurch, daß die Verzögerungswarnlichter nicht - wie heute üblich - möglichst formschön in den beiden Heckleuchtenkombinationen integriert sind sondern in Form von zwei getrennt angeordneten Lichtleisten oder einer besonders langen Lichtleiste. Entsprechend dem Vorschlag, mit steigendem Gefahrengesamtwert auch die leuchtende Fläche zu vergrößern, kann auch die Länge zweier Lichtleisten vergrößert werden. Mit kleinen Glühlampen, besonders aber mit Leuchtdioden ist dies nach Fig. 6a, z.B. zwischen der Stoßstange und der Unterkante des Kofferraumdeckels, nach Fig. 6b an der Unterkante der Heckscheibe oder nach Fig. 6c an deren Oberkante platzsparend möglich. Bei kleinen Gefahrengesamtwerten blinken nur die äußeren Teile der Lichtleisten; bei größeren Gefahrengesamtwerten verlängern sich diese in Richtung zur Fahrzeugmitte und bei hohen oder höchsten Gefahrengesamtwerten vereinigen sie sich in Fahrzeugmitte, wie dies in Fig. 7a bis 7f dargestellt ist. Durch die räumliche Trennung von den übrigen Lichtern und durch die Leistenform wird die Gefahr der Verwechslung mit einem Fahrtrichtungsblinklicht umso kleiner, je größer der Gefahrengesamtwert und je länger deshalb die blinkenden Teile der beiden Lichtleisten sind. Die Lichtleisten haben zudem den Vorteil, daß die Intensität der Warnung auffällig signalisiert wird und daß sie, besonders im Zustand hoher Intensität, optisch und physiologisch wie Absperrschranken wirken.

Ausführungsbeispiele der Erfindung wurden anhand der beigefügten Zeichnung bereits in der Beschreibung erläutert.

In den Zeichnungen zeigt:

Fig. 1          Die Blink-Charakteristik mit langen Leuchtphasen und kurzen konstanten Pausen sowie steigender Frequenz.

Fig. 2          Die Blink-Charakteristik mit kurzen konstanten Leuchtphasen und langen variablen Pausen sowie steigender Frequenz.

Fig. 3          Die Blinkcharakteristik mit gleich langen Leuchtphasen und Pausen sowie steigender Frequenz.

Fig. 4          Die zeitlich aufeinanderfolgende Kombination der Charakteristik nach Fig. 1 und 3.

Fig. 5          Eine weitere Charakteristik in Form einer anderen Kombination.

Fig. 6a          Die Anordnung vieler Verzögerungslichter die, als Lichtleiste zwischen Stoßstange und Kofferraumdeckel angeordnet ist.

Fig. 6b          Eine Lichtleiste an der Unterkante des Heckfensters.

Fig. 6c          Eine Lichtleiste über dem Heckfenster.

Fig. 7a bis 7 f          Die blinkenden Teile zweier Lichtleisten bei geringer Intensität der Warnung (Fig. 7a) in mehreren Stufen bis zu hoher Intensität der Warnung (Fig. 7f).

## Patentansprüche

1. Verzögerungswarnanlage zur Reduzierung der Gefahr von Auffahrunfällen im Straßenverkehr, wobei die Intensität der Warnung durch die Verzögerungswarnanlage eines vorausfahrenden Fahrzeugs abhängig ist von der Höhe eines Gefahrenwertes (G), der von diesem Fahrzeug ausgeht und der für nachfolgende Fahrzeuge wirksam werden kann, welcher Gefahrenwert (G) abhängig ist von der Verzögerung (b) und der Zeit (t) oder dem Weg (s), während der bzw. dem die Verzögerung vorliegt,
   **dadurch gekennzeichnet**,
   daß der die Intensität der Warnung bestimmende Gefahrenwert ein Gefahrengesamtwert ($\Sigma G$) ist, der festgestellt wird durch ein Zeitintegral oder Wegintegral der Form

$$\Sigma G = \int_0^t b\,(t)^n\, dt \text{ oder } \Sigma G = \int_0^s b\,(s)^n\, ds.$$

2. Verzögerungswarnanlage nach Anspruch 1, dadurch gekennzeichnet, daß der Gefahrengesamtwert ($\Sigma G$) festgestellt wird durch ein Zeitintegral oder Wegintegral der Form

$$\Sigma G = \int_0^t b\,(t)\, dt \text{ oder } \Sigma G = \int_0^t b\,(s)\, ds$$

3. Verzögerungswarnanlage nach Anspruch 1, dadurch gekennzeichnet, daß der Gefahrengesamtwert festgestellt wird durch ein Zeitintegral oder Wegintegral der Form

$$\Sigma G = \int_0^t b\,(t)^2\, dt \text{ oder } \Sigma G = \int_0^s b\,(s)^2\, ds.$$

4. Verzögerungswarnanlage nach einem der vorhergehenden Ansprüche, dadurch gekennzeichnet, daß die Warnung durch ein Verzögerungswarnlicht erfolgt, welches intermittierend aufleuchtet.

5. Verzögerungswarnanlage nach einem der vorhergehenden Ansprüche, dadurch gekennzeichnet, daß die Verzögerung (b) und/oder der Zeitraum (t) und/oder der Verzögerungsweg (s) verstärkt oder abgeschwächt berücksichtigt werden.

6. Verzögerungswarnanlage nach einem der vorhergehenden Ansprüche, dadurch gekennzeichnet, daß die Höhe der vor der Verzögerung gefahrenen Geschwindigkeit verstärkend berücksichtigt wird, vorzugsweise durch eine additive Konstante oder einen multiplikativen Faktor.

7. Verzögerungswarnanlage nach Ahspruch 6, dadurch gekennzeichnet, daß der Gefahrengesamtwert ($\Sigma G$) abhängig ist vom Quadrat der vor der Verzögerung gefahrenen Geschwindigkeit.

8. Verzögerungswarnanlage nach Anspruch 7, dadurch gekennzeichnet, daß der Gefahrengesamtwert ($\Sigma G$) abhängig ist vom Quadrat der vor der Verzögerung gefahrenen Geschwindigkeit gemäß

$$\Sigma G = v_0{}^2 + \int_0^t b^2\, dt \text{ oder } \Sigma G = v_0{}^2 \times \int_0^t b^2\, dt$$

9. Verzögerungswarnanlage nach einem der vorhergehenden Ansprüche, dadurch gekennzeichnet, daß während des Ansprechens eines Antiblockiersystems die Begrenzung des hydraulischen Bremsdruckes bei der Bildung des Gefahrengesamtwertes ($\Sigma G$) verstarkend berücksichtigt wird.

10. Verzögerungswarnanlage nach einem der vorhergehenden Ansprüche, dadurch gekennzeichnet, daß durch ein Abstandsradar oder ein Ultraschall-Abstandswarngerät am Heck des Fahrzeugs der Abstand des nachfolgenden Fahrzeugs in Abhängigkeit von der Geschwindigkeit bei der Bildung des Gefahrengesamtwerts ($\Sigma G$) berücksichtigt wird.

11. Verzögerungswarnanlage nach einem der vorhergehenden Ansprüche, dadurch gekennzeichnet, daß der Gefahrengesamtwert ($\Sigma G$) durch laufende Registrierung, Integration und Speicherung neu hinzukommender Gefahrenteilwerte ($\Delta G$) erhöht und aktualisiert wird.

12. Verzögerungswarnanlage nach einem der vorhergehenden Ansprüche, dadurch gekennzeichnet, daß der Gefahrengesamtwert ($\Sigma G$) durch Integration negativer Gefahrenteilwerte ($-\Delta G$) vermindert und aktualisiert wird.

**13.** Verzögerungswarnanlage nach einem der vorhergehenden Ansprüche, dadurch gekennzeichnet, daß eine Speicherung negativer Gefahrengesamtwerte ($\Sigma$G) unterdrückt wird.

**14.** Verzögerungswarnanlage nach einem der vorhergehenden Ansprüche, dadurch gekennzeichnet, daß eine Löschung des gespeicherten Gefahrengesamtwertes ($\Sigma$G) durch Zeitablauf erfolgt.

**15.** Verzögerungswarnanlage nach einem der vorhergehenden Ansprüche, dadurch gekennzeichnet, daß die Löschung in einer bestimmten Funktion nach der Zeit (t) oder in Abhängigkeit von dem jeweiligen Gefahrenrestwert erfolgt.

**16.** Verzögerungswarnanlage nach einem der vorhergehenden Ansprüche, dadurch gekennzeichnet, daß die Löschung bei einem bestimmten noch gespeicherten Gefahrenrestwert unterbrochen wird.

**17.** Verzögerungswarnanlage nach einem der vorhergehenden Ansprüche, dadurch gekennzeichnet, daß die Löschung in Abhängigkeit von der Geschwindigkeit oder von der ABS-Funktion bei einem bestimmten noch gespeicherten Gefahrenrestwert unterbrochen wird.

**18.** Verzögerungswarnanlage nach einem der vorhergehenden Ansprüche, dadurch gekennzeichnet, daß die Löschung in Abhängigkeit von einem bestimmten geschwindigkeitsabhängigen Mindestabstand des nachfolgenden Fahrzeugs unterbrochen wird.

**19.** Verzögerungswarnanlage nach einem der vorhergehenden Ansprüche, dadurch gekennzeichnet, daß die Löschung dauernd in Funktion ist oder bei Einspeicherung positiver Gefahrenteilwerte ($\Delta$G) unterbrochen wird.

**20.** Verzögerungswarnanlage nach einem der vorhergehenden Ansprüche, dadurch gekennzeichnet, daß die Auslösung der Warnung erst durch Überschreitung eines geschwindigkeitsabhängigen Grenzwertes des gespeicherten Gefahrengesamtwertes ($\Sigma$G) eintritt.

**21.** Verzögerungswarnanlage nach einem der vorhergehenden Ansprüche, dadurch gekennzeichnet, daß die Auslösung der Warnung durch ein nach rückwärts gerichtetes Abstandsradar erfolgt in Abhängigkeit von der Unterschreitung des geschwindigkeitsabhängigen Mindestabstandes zum nachfolgenden Fahrzeug.

**22.** Verzögerungswarnanlage nach einem der vorhergehenden Ansprüche, dadurch gekennzeichnet, daß das Verzögerungswarnlicht kurze gleichbleibende Dunkelphasen und ungleich lange Hellphasen aufweist, welche bei Erhöhung des Gefahrengesamtwertes ($\Sigma$G) (kontinuierlich oder abgestuft) kürzer werden.

**23.** Verzögerungswarnanlage nach einem der vorhergehenden Ansprüche, dadurch gekennzeichnet, daß das Verzögerungswarnlicht kurze gleichbleibende Hellphasen und ungleich lange Dunkelphasen aufweist, welche bei Erhöhung des Gefahrengesamtwertes ($\Sigma$G) (kontinuierlich oder abgestuft) kürzer werden.

**24.** Verzögerungswarnanlage nach einem der vorhergehenden Ansprüche, dadurch gekennzeichnet, daß das Verzögerungswarnlicht gleich lange Hell- und Dunkelphasen aufweist, welche bei Erhöhung des Gefahrengesamtwertes ($\Sigma$G) (kontinuierlich oder abgestuft) im Gleichtakt kürzer werden.

**25.** Verzögerungswarnanlage nach einem der Ansprüche 22 bis 24, dadurch gekennzeichnet, daß die Charakteristik der Hell- und Dunkelphasen aus einer gleichzeitigen Kombination der Charakteristiken nach den kennzeichnenden Merkmalen der Ansprüche 22 und 24 oder nach den kennzeichnenden Merkmalen der Ansprüche 23 und 24 besteht.

**26.** Verzögerungswarnanlage nach einem der Ansprüche 22 bis 24, dadurch gekennzeichnet, daß die Charakteristik aus einer zeitlich aufeinanderfolgenden Kombination der Charakteristiken nach den kennzeichnenden Merkmalen der Ansprüche 22 und 24 oder 23 und 24 besteht.

**27.** Verzögerungswarnanlage nach einem der vorhergehenden Ansprüche, dadurch gekennzeichnet, daß zu Beginn einer Warnung eine Hell-Phase ausgelöst wird.

**28.** Verzögerungswarnanlage nach einem der vorhergehenden Ansprüche, dadurch gekennzeichnet, daß Helligkeit oder die Lichtstärke des Verzögerungswarnlichtes mit der Erhöhung des Gefahrengesamtwertes Zunimmt.

29. Verzögerungswarnanlage nach einem der vorhergehenden Ansprüche, dadurch gekennzeichnet, daß die Anzahl der aufleuchtenden Verzögerungswarnlichter oder deren wirksame Oberfläche mit der Erhöhung des Gefahrengesamtwertes zunimmt.

30. Verzögerungswarnanlage nach einem der vorhergehenden Ansprüche, dadurch gekennzeichnet, daß die Verzögerungswarnlichter in Form von Lichtleisten angeordnet sind, deren leuchtende Länge mit der Erhöhung des Gefahrengesamtwertes zunimmt.

31. Verzögerungswarnanlage nach einem der vorhergehenden Ansprüche, dadurch gekennzeichnet, daß die Helligkeit des Verzögerungswarnlichtes von der Umgebungshelligkeit abhängig ist.

**Claims**

1. Deceleration Warning system for reducing the danger of collision accidents in road traffic, whereby the intensity of the Warning by the deceleration warning system of a vehicle ahead depends on the level of a danger value (G) which is emitted by this vehicle and which can be effective for following vehicles, which danger value (G) depends on the deceleration (b) and the time (t) or the distance (s) during which the deceleration is present, characterised in that the danger value determining the intensity of the warning is an overall danger value ($\Sigma G$) which is determined by a time integral or distance integral of the form

$$\Sigma G = \int_0^t b(t)^n \, dt \text{ or } \Sigma G = \int_0^s b(s)^n \, ds$$

2. Deceleration warning system according to Claim 1, characterised in that the overall danger value ($\Sigma G$) is determined by a time integral or a distance integral of the form

$$\Sigma G = \int_0^t b(t) \, dt \text{ or } \Sigma G = \int_0^s b(s) \, ds$$

3. Deceleration warning system according to Claim 1, characterised in that the overall danger value is determined by a time integral or distance integral of the form

$$\Sigma G = \int_0^t b(t)^2 \, dt \text{ or } \Sigma G = \int_0^s b(s)^2 \, ds$$

4. Deceleration warning system according to one of the preceding claims, characterised in that the warning takes place by means of a deceleration warning light which illuminates intermittently.

5. Deceleration warning system according to one of the preceding claims, characterised in that the deceleration (b) and/or the time interval (t) and/or the deceleration distance (s) are taken into account in an amplified or attenuated manner.

6. Deceleration warning system according to one of the preceding claims, characterised in that the level of the speed driven before the acceleration is taken into account in an. amplified manner, preferably by an additive constant or a multiplicative factor.

7. Deceleration warning system according to Claim 6, characterised in that the overall danger value ($\Sigma G$) depends of the square of the speed driven before the deceleration.

8. Deceleration warning system according to Claim 7, characterised in that the overall danger value ($\Sigma G$) depends on the square of the speed driven before the deceleration in accordance with

$$\Sigma G = v_0^2 + \int_0^t b^2 \, dt \text{ or } \Sigma G = v_0^2 \times \int_0^t b^2 \, dt$$

9. Deceleration warning system according to one of the preceding claims, characterised in that during the response of an anti-locking brake system, the limitation of the hydraulic braking pressure is taken into account in an amplified manner in the formation of the overall danger value ($\Sigma G$).

10. Deceleration warning system according to one of the preceding claims, characterised in that by means of a distance radar or an ultrasonic distance warning unit on the rear of the vehicle, the distance to the following vehicle is taken into account as a function of the speed in the formation of the overall danger value ($\Sigma G$).

11. Deceleration warning system according to one of the preceding claims, characterised in that the overall danger value ($\Sigma G$) is increased and brought up to date by continuous recording, integration and storage of newly arrived partial danger values ($\Delta G$).

12. Deceleration warning system according to one of the preceding claims, characterised in that the overall danger value ($\Sigma G$) is reduced and brought up to date by integration of negative partial danger of values ($-\Delta G$).

13. Deceleration warning system according to one of the preceding claims, characterised in that storage of negative overall danger values ($\Sigma G$) is suppressed.

14. Deceleration warning system according to one of the preceding claims, characterised in that the stored overall danger value ($\Sigma G$) is erased by expiration of time.

15. Deceleration warning system according to one of the preceding claims, characterised in that the erasing takes place as a particular function of time (t) or depending on the respective residual danger value.

16. Deceleration warning system according to one of the preceding claims, characterised in that the erasing is interrupted in the case of a certain residual danger value still being stored.

17. Deceleration warning system according to one of the preceding claims, characterised in that the erasing is interrupted as a function of the speed or of the anti-locking braking system function in the case of a certain residual danger value still being stored.

18. Deceleration warning system according to one of the preceding claims, characterised in that the erasing is interrupted as a function of a certain speed-dependent minimum distance to the following vehicle.

19. Deceleration warning system according to one of the preceding claims, characterised in that the erasing is continually in function or is interrupted when positive partial danger values ($\Delta G$) are stored.

20. Deceleration warning system according to one of the preceding claims, characterised in that the initiation of the warning only appears when a speed-dependent limiting value of the stored overall danger value ($\Sigma G$) is exceeded.

21. Deceleration warning system according to one of the preceding claims, characterised in that the initiation of the warning takes place by means of a rearwards directed distance radar and depends on the distance to the following vehicle being less than the speed-dependent minimum distance.

22. Deceleration warning system according to one of the preceding claims, characterised in that the deceleration warning has short constant dark phases and unequal long light phases which become shorter when the overall danger value ($\Sigma G$) is increased (continuously or in steps).

23. Deceleration warning system according to one of the preceding claims, characterised in that the deceleration warning light has short constant light phases and unequal long dark phases which become shorter as the overall danger value ($\Sigma G$) is increased (continuously or in steps).

24. Deceleration warning system according to one of the preceding claims, characterised in that the deceleration warning light has equally long light and dark phases which become shorter in synchronism when the overall danger value ($\Sigma$G) is increased (continuously or in steps).

**25.** Deceleration warning system according to one of the preceding claims, characterised in that the characteristic of the light and dark phases consists of a simultaneous combination of the characteristics in accordance with the characterising features of Claims 22 and 24 or in accordance with the characterising features of Claims 23 and 24.

**26.** Deceleration warning system according to one of Claims 22 to 24, characterised in that the characteristic consists of a combination in time sequence of the characteristics in accordance with the characterising features of Claims 22 and 24 or Claims 23 and 24.

**27.** Deceleration warning system according to one of the preceding claims, characterised in that a light phase is initiated at the beginning of a warning.

**28.** Deceleration warning system according to one of the preceding claims, characterised in that the brightness or the luminous intensity of the deceleration warning light increases with increase of the overall danger value.

**29.** Deceleration warning system according to one of the preceding claims, characterised in that the number of the illuminating deceleration warning lights or their effective surface increases with increase in the overall danger value.

**30.** Deceleration warning system according to one of the preceding claims, characterised in that the deceleration warning lights are provided in the form of light strips whose illuminated length increases with increase in the overall danger value.

**31.** Deceleration warning system according to one of the preceding claims, characterised in that the brightness of the deceleration warning light depends on the ambient brightness.

**Revendications**

**1.** Dispositif avertisseur de décélération destiné à réduire le risque de collisions par l'arrière dans la circulation routière, l'intensité de l'avertissement émis par le dispositif avertisseur de décélération d'un véhicule précédent dépendant de l'ordre de grandeur d'une valeur du danger (G), qui émane dudit véhicule et qui peut devenir efficace pour les véhicules suivants, laquelle valeur du danger (G) dépend de la décélération (b) et du temps (t) ou de la distance (s), pendant lequel ou laquelle se produit la décélération, caractérisé en ce que la valeur du danger qui détermine l'intensité de l'avertissement est une valeur globale du danger ($\Sigma$G), qui est calculée par une intégrale de temps ou une intégrale de distance de la forme suivante :

$$\Sigma G = \int_{o}^{t} b(t)^{n}dt \text{ ou } \Sigma G = \int_{o}^{s} b(s)^{n}ds$$

**2.** Dispositif avertisseur de décélération selon la revendication 1, caractérisé en ce que la valeur globale du danger ($\Sigma$G) est calculée par une intégrale de temps ou une intégrale de distance de la forme suivante :

$$\Sigma G = \int_{o}^{t} b(t)dt \text{ ou } \Sigma G = \int_{o}^{t} b(s)ds$$

**3.** Dispositif avertisseur de décélération selon la revendication 1, caractérisé en ce que la valeur globale du danger est calculée par une intégrale de temps ou une intégrale de distance de la forme suivante :

$$\Sigma G = \int_{o}^{t} b(t)^{2}dt \text{ ou } \Sigma G = \int_{o}^{t} b(s)^{2}ds$$

**4.** Dispositif avertisseur de décélération selon l'une quelconque des revendications précédentes, caractérisé en ce que l'avertissement est émis par un feu avertisseur de décélération qui s'allume et s'éteint par intermittence.

**5.** Dispositif avertisseur de décélération selon l'une quelconque des revendications précédentes, caractérisé en ce que l'on tient compte de manière amplifiée ou affaiblie de la décélération (b) et/ou de l'intervalle de temps (t) et/ou de la distance de décélération (s).

**6.** Dispositif avertisseur de décélération selon l'une quelconque des revendications précédentes, caractérisé en ce que l'on tient compte de manière amplifiée de l'importance de la vitesse du véhicule avant la décélération, de préférence par une constante additive ou par un facteur multiplicatif.

**7.** Dispositif avertisseur de décélération selon la revendication 6, caractérisé en ce que la valeur globale du danger ($\Sigma G$) dépend du carré de la vitesse du véhicule avant la décélération.

**8.** Dispositif avertisseur de décélération selon la revendication 7, caractérisé en ce que la valeur globale du danger ($\Sigma G$) dépend du carré de la vitesse du véhicule avant la décélération, selon

$$\Sigma G = v_o^2 + \int_o^t b^2 dt \text{ ou } \Sigma G = v_o^2 \times \int_o^t b^2 dt$$

**9.** Dispositif avertisseur de décélération selon l'une quelconque des revendications précédentes, caractérisé en ce que, pendant le déclenchement d'un système ABS, le calcul de la valeur globale du danger ($\Sigma G$) tient compte de manière amplifiée de la limitation de la pression de freinage hydraulique.

**10.** Dispositif avertisseur de décélération selon l'une quelconque des revendications précédentes, caractérisé en ce que, par l'intermédiaire d'un radar de distance ou d'un dispositif avertisseur de distance par ultrasons, monté à l'arrière du véhicule, le calcul de la valeur globale du danger ($\Sigma G$) tient compte de la distance du véhicule suivant en fonction de la vitesse.

**11.** Dispositif avertisseur de décélération selon l'une quelconque des revendications précédentes, caractérisé en ce que la valeur globale du danger ($\Sigma G$) est augmentée et actualisée par un enregistrement, une intégration et une mise en mémoire continus des valeurs partielles du danger ($\Delta G$) nouvelles qui s'ajoutent.

**12.** Dispositif avertisseur de décélération selon l'une quelconque des revendications précédentes, caractérisé en ce que la valeur globale du danger ($\Sigma G$) est diminuée et actualisée par l'intégration de valeurs partielles négatives du danger ($-\Delta G$).

**13.** Dispositif avertisseur de décélération selon l'une quelconque des revendications précédentes, caractérisé en ce que des valeurs globales négatives du danger ($\Sigma G$) ne sont pas stockées en mémoire.

**14.** Dispositif avertisseur de décélération selon l'une quelconque des revendications précédentes, caractérisé en ce que la procédure de suppression de la valeur globale du danger ($\Sigma G$) stockée en mémoire est exécutée à l'échéance d'un temps défini.

**15.** Dispositif avertisseur de décélération selon l'une quelconque des revendications précédentes, caractérisé en ce que la procédure de suppression est exécutée dans une fonction déterminée après l'intervalle de temps (t) ou en fonction de chaque valeur résiduelle du danger.

**16.** Dispositif avertisseur de décélération selon l'une quelconque des revendications précédentes, caractérisé en ce que la procédure de suppression est interrompue lorsqu'une valeur résiduelle du danger déterminée encore stockée en mémoire est atteinte.

**17.** Dispositif avertisseur de décélération selon l'une quelconque des revendications précédentes, caractérisé en ce que la procédure de suppression est interrompue en fonction de la vitesse ou de la fonction ABS lorsqu'une valeur résiduelle du danger déterminée encore stockée en mémoire est atteinte.

**18.** Dispositif avertisseur de décélération selon l'une quelconque des revendications précédentes, caractérisé en ce que la procédure de suppression est interrompue en fonction d'une distance minimale déterminée liée à la vitesse, par rapport au véhicule suivant.

**19.** Dispositif avertisseur de décélération selon l'une quelconque des revendications précédentes, caractérisé en ce que la procédure de suppression est exécutée en permanence ou interrompue au moment de la mise en mémoire de valeurs partielles positives du danger ($\Delta$G).

**20.** Dispositif avertisseur de décélération selon l'une quelconque des revendications précédentes, caractérisé en ce que l'avertissement est déclenché uniquement en cas de dépassement d'une valeur limite, liée à la vitesse, de la valeur globale du danger ($\Sigma$G) stockée en mémoire.

**21.** Dispositif avertisseur de décélération selon l'une quelconque des revendications précédentes, caractérisé en ce que l'avertissement est déclenché par un radar de distance orienté vers l'arrière, en fonction du dépassement de la distance minimale, liée à la vitesse, par rapport au véhicule suivant.

**22.** Dispositif avertisseur de décélération selon l'une quelconque des revendications précédentes, caractérisé en ce que le feu avertisseur de décélération présente de courtes phases d'obscurité de longueur constante et des phases d'éclairage de longueur variable, lesquelles deviennent de plus en plus courtes (en continu ou par niveax) lorsque la valeur globale du danger ($\Sigma$G) augmente.

**23.** Dispositif avertisseur de décélération selon l'une quelconque des revendications précédentes, caractérisé en ce que le feu avertisseur de décélération présente de courtes phases d'éclairage de longueur constante et des phases d'obscurité de longueur variable, lesquelles deviennent de plus en plus courtes (en continu ou par niveaux) lorsque la valeur globale du danger ($\Sigma$G) augmente.

**24.** Dispositif avertisseur de décélération selon l'une quelconque des revendications précédentes, caractérisé en ce que le feu avertisseur de décélération présente des phases d'éclairage et des phases d'obscurité de même longueur, lesquelles deviennent de plus en plus courtes à la même cadence (en continu ou par niveaux) lorsque la valeur globale du danger ($\Sigma$G) augmente.

**25.** Dispositif avertisseur de décélération selon l'une quelconque des revendications 22 à 24, caractérisé en ce que la caractéristique des phases d'éclairage et des phases d'obscurité résulte d'une combinaison simultanée des caractéristiques selon la partie caractérisante des revendications 22 et 24 ou selon la partie caractérisante des revendications 23 et 24.

**26.** Dispositif avertisseur de décélération selon l'une quelconque des revendications 22 à 24, caractérisé en ce que la caractéristique résulte d'une combinaison successive liée au temps des caractéristiques selon la partie caractérisante des revendications 22 et 24 ou 23 et 24.

**27.** Dispositif avertisseur de décélération selon l'une quelconque des revendications précédentes, caractérisé en ce qu'une phase d'éclairage est déclenchée au début d'un processus d'avertissement.

**28.** Dispositif avertisseur de décélération selon l'une quelconque des revendications précédentes, caractérisé en ce que la luminosité ou l'intensité lumineuse du feu avertisseur de décélération augmente lorsque la valeur globale du danger augmente.

**29.** Dispositif avertisseur de décélération selon l'une quelconque des revendications précédentes, caractérisé en ce que le nombre de feux avertisseurs de décélération ou leur surface efficace augmente lorsque la valeur globale du danger augmente.

**30.** Dispositif avertisseur de décélération selon l'une quelconque des revendications précédentes, caractérisé en ce que les feux avertisseurs de décélération sont conçus sous forme de rampes lumineuses, dont la longueur d'éclairage augmente lorsque la valeur globale du danger augmente.

**31.** Dispositif avertisseur de décélération selon l'une quelconque des revendications précédentes, caractérisé en ce que la luminosité du feu avertisseur de décélération dépend de la luminosité de l'environnement.

EP 0 611 679 B1

# Fig. 1

geringe Intensität

hohe Intensität

z.B. Regelbereich 1:5

Dunkelphase
Hellphase

1sec

# Fig. 2

sehr geringe Intensität

max 3sec

hohe Intensität

Regelbereich 1:2

1sec

# Fig. 3

geringe Intensität

max 3sec

sehr hohe Intensität

Regelbereich 1:12

$1/_{4}$ sec

1sec

# Fig. 4

geringe Intensität

nach
Fig.1

nach
Fig. 3

sehr hohe Intensität

Regelbereich nach Fig.1    1:5

⊢ ¹/₄ sec

Regelbereich nach Fig.3    1:4

⊢——⊣ 1sec

Regelbereich nach Fig.1+3    1:20

# Fig. 5

geringe Intensität

— max 3sec

nach
Fig.1/3

nach
Fig. 3

sehr hohe Intensität

Regelbereich nach Fig.1/3    1:3

⊢ ¹/₄ sec

Regelbereich
nach Fig. 3    1:4

⊢——⊣ 1sec

Regelbereich nach Fig.1/3 u. 3  1:18

Fig. 6a

Fig. 6b

Fig. 6c

EP 0 611 679 B1

Fig. 7a
Fig. 7b
Fig. 7c
Fig. 7d
Fig. 7e
Fig. 7f

22